# EUROPEAN PATENT SPECIFICATION

(11) **EP 2 266 866 B1**
(45) Date of publication and mention of the grant of the patent: **28.03.2012**
(21) Application number: 10150724.2
(22) Date of filing: 14.01.2010
(51) Int. Cl.: B62D 33/00, B62D 33/02

(54) **Truck bed mountable storage system**
Auf einer Lastkraftwagenladefläche montierbares Aufbewahrungssystem
Système de stockage pouvant être monté sur une plate-forme de camion

(30) Priority: 23.06.2009 US 219711 P; 06.01.2010 US 683166
(43) Date of publication of application: 29.12.2010
(73) Proprietor: The Stanley Works Israel Ltd., 48091 Rosh Ha'Ayin (IL)
(72) Inventor: Vilkomirski, Gil, Petach-Tiqwa (IL); Twig, Noam, Petach Tikva (IL)
(74) Representative: Barrett, Jennifer Catherine

(56) References cited:
- EP-A- 0 025 768
- US-A- 3 446 517
- US-A1- 2002 180 179

## Description

The present invention relates to a truck bed mountable storage system.

In embodiments, the present invention relates to a storage container system, and, more particularly to a storage container system that can be mounted to a truck bed.

Numerous container assemblies are known in the art. These container assemblies can be transported from one place to another, and store objects that are needed for accomplishing a task. The present invention relates to a truck bed mountable storage system having a dock unit that can be fixed to a truck bed and a storage container that can be releasably locked to the dock unit, thus facilitating the secure transport of the storage container from one location to another.

US-A-3,446,517 discloses a freight vehicle with a rollback body. The vehicle comprises a cargo-supporting frame and a body movable longitudinally and independly of both the cargo and the frame.

According to a first aspect of the present invention, there is provided a truck bed mountable storage system, comprising: a container unit comprising (a) a base container defining a storage space for storing items and (b) a cover, the cover being movable between an open condition permitting access to the storage space and a closed condition preventing access to the storage space; (c) one or more rollers arranged to rollingly transport the container unit; and (d) a handle to facilitate the rolling transport of the container unit on the one or more rollers; a dock unit constructed and arranged to be fixed to a truck bed; a latch engaging structure provided on one of the of the dock unit and the container unit; a latch provided on the other of the dock unit and the container unit, the latch being movable between (a) a latching position engaging the latch engaging structure to releasably lock the container unit to the dock unit and (b) a releasing position releasing the latch from the latch engaging structure to enable removal of the container unit from the dock unit, wherein when released and removed from the dock unit, the container unit can be rollingly transported; and a release member for moving the latch between the latching and releasing positions.

In an embodiment, the dock unit further comprises a latch lock, the latch lock constructed and arranged to be in a first condition that prevents the release member from being movable to release the latch, or a second condition that permits the release member to be movable to release the latch.

In an embodiment, the container unit is mounted on top of the dock unit when locked to one another, and wherein a portion of the dock unit that carries the release member and the latch lock is positioned outwardly from beneath the container to facilitate access to the release member and the latch lock.

In an embodiment, the latch lock comprises a key and key cylinder, wherein the key can be used to move the latch lock into the first condition or the second condition.

In an embodiment, the cover is pivotally connected to the base container, and further comprising a cover lock constructed and arranged to releasably lock the cover to the base container.

In an embodiment, the storage system further comprises a key that is usable to lock and unlock the cover lock.

In an embodiment, the same key can be used to move the latch lock between the first and second conditions as well as to lock and unlock the cover lock.

In an embodiment, the container unit has at least one wheel disposed toward a lower portion thereof, and a handle to facilitate rolling movement of the container on the at least one wheel.

In an embodiment, the container unit locks to the dock unit by horizontally moving the latch engaging structure into locking engagement with the latch on the dock unit.

In an embodiment, the at least one wheel facilitates horizontal movement of the container and latch engagement structure thereof into locking engagement with the latch on the dock unit.

In an embodiment, the cover is pivotally connected to the base container, and further comprising a cover lock constructed and arranged to releasably lock the cover to the base container.

In an embodiment, the dock unit comprises a stop structure engageable with a stop engaging structure on the container unit, wherein engagement between the stop structure and the stop engaging structure further restrains movement between the dock unit and container unit when the container unit is locked to the dock unit.

In an embodiment, the stop engaging structure must move horizontally away from the stop structure to disengage from the stop structure.

In an embodiment, the dock unit further comprises a latch lock, the latch lock constructed and arranged to be in a first condition that prevents the release member from being movable to release the latch, or a second condition that permits the release member to be movable to release the latch.

In an embodiment, the container unit is mounted on top of the dock unit when locked to one another, and wherein a portion of the dock unit that carries the release member and the latch lock is positioned outwardly from beneath the container to facilitate access to the release member and the latch lock.

In an embodiment, the latch lock comprises a key and key cylinder, wherein the key can be used to move the latch lock into the first condition or the second condition.

In an embodiment, the cover is pivotally connected to the base container, and further comprising a cover lock constructed and arranged to releasably lock the cover to the base container.

In an embodiment, the storage system further comprises a key that is usable to lock and unlock the cover lock.

In an embodiment, the same key can be used to move the latch lock between the first and second conditions as well as to lock and unlock the cover lock.

In an embodiment, the container unit has at least one wheel disposed toward a lower portion thereof, and a handle to facilitate rolling movement of the container on the at least one wheel.

In an embodiment, the container unit locks to the dock unit by horizontally moving the latch engaging structure into locking engagement with the latch on the dock unit.

In an embodiment, the at least one wheel facilitates horizontal movement of the container and latch engagement structure thereof into locking engagement with the latch on the dock unit.

In an embodiment, the cover is pivotally connected to the base container, and further comprising a cover lock constructed and arranged to releasably lock the cover to the base container.

In an embodiment, the dock unit comprises a stop structure engageable with a stop engaging structure on the container unit, wherein engagement between the stop structure and the stop engaging structure further restrains movement between the dock unit and container unit when the container unit is locked to the dock unit.

In an embodiment, the stop engaging structure must move horizontally away from the stop structure to disengage from the stop structure.

Any features expressed as being provided in an embodiment, can be provided in combination with any other one or more such features together with one or more of the aspects of the invention.

One aspect of the present invention provides a truck bed mountable storage system. The truck bed mountable storage system includes a container unit and a dock unit. The container unit includes a base container defining a storage space for storing items and a cover. The cover is movable between an open condition permitting access to the storage space and a closed condition preventing access to the storage space. The container unit also includes a latch engaging structure. The dock unit is constructed and arranged to be fixed to a truck bed. The dock unit includes a latch arranged to releasably lock the latch engaging structure so as to releasably lock the container unit to the dock unit. The dock unit carries a release member that is movable to release the latch and thereby release the container unit from the dock unit.

Another aspect of the present invention provides a truck bed mountable storage system. The truck bed mountable storage system includes a container unit and a dock unit. The container unit includes a base container defining a storage space for storing items and a cover. The cover is movable between an open condition permitting access to the storage space and a closed condition preventing access to the storage space. The dock unit is constructed and arranged to be fixed to a truck bed. A latch engaging structure provided on one of the of the dock unit and the container unit, and a latch is provided on the other of the dock unit and the container unit. The latch is movable between a latching position wherein the latch engages the latch engaging structure to releasably lock the container unit to the dock unit and a releasing position wherein the latch releases the latch engaging structure to enable removal of the container unit from the dock unit. The truck bed mountable storage system also includes a release member for moving the latch between the latching and releasing positions.

According to a further aspect of the present invention, there is provided, for use with a truck bed mountable storage system, a container unit comprising (a) a base container defining a storage space for storing items and (b) a cover, the cover being movable between an open condition permitting access to the storage space and a closed condition preventing access to the storage space, the container unit including a latch engaging structure for engagement, in use with a latch on a dock unit that is constructed and arranged to be fixed to a truck bed.

According to a further aspect of the present invention, there is provided, for use as part of a truck bed mountable storage system, a dock unit constructed and arranged to be fixed to a truck bed, the dock unit including a latch arranged to releasably lock a latch engaging structure provided on a container unit so as to releasably lock the container unit to the dock unit, the dock unit carrying a release member that is movable to release the latch and thereby release the container unit from the dock unit.

These and other aspects of the present invention, as well as the methods of operation and functions of the related elements of structure and the combination of parts and economies of manufacture, will become more apparent upon consideration of the drawings, all of which form a part of this specification, wherein like reference numerals designate corresponding parts in the various figures. In one embodiment, the structural components illustrated herein can be considered drawn to scale. It is to be expressly understood, however, that the drawings are for the purpose of illustration and description only and are not a limitation of the invention. In addition, it should be appreciated that structural features shown or described in any one embodiment herein can be used in other embodiments as well. As used in the specification and in the claims, the singular form of "a", "an", and "the" include plural referents unless the context clearly dictates otherwise.

Example of embodiments of the present invention will now be described by way of example with reference to the accompanying drawings, in which:
FIG. 1 is a perspective view of a container portion of a container and a dock unit in accordance with an embodiment of the present invention;
FIG. 2 is a perspective side view of the container portion and the dock unit in accordance with the embodiment shown in FIG. 1;
FIG. 3 is a perspective view of the dock unit fixed to a truck bed in accordance with the embodiment shown in FIG. 1;
FIG. 4 is a perspective top view of the container in accordance with the embodiment shown in FIG. 1;
FIG. 5 is a front view of the container in accordance with the embodiment shown in FIG. 1;
FIG. 6 is a perspective view of the container portion being mounted to the dock unit fixed to a truck bed in accordance the embodiment shown in FIG. 1;
FIG. 7 is a perspective side view of the container portion mounted on and locked to the dock unit fixed on a truck bed in accordance with the embodiment shown in FIG. 1;
FIG. 8 is a top view of a stop structure and latch of the dock unit with a cover of the dock unit removed to show details of the stop structure and latch in accordance with the embodiment shown in FIG. 1;
FIG. 9 is a partial cross-sectional view of the container mounted on the dock unit with half of the container and dock unit removed to show details of the latch, a latch engaging structure, a stop structure, and a stop engaging structure in accordance with the embodiment shown in FIG. 1;
FIG. 10 is a perspective view of the dock unit in accordance with the embodiment shown in FIG. 1;
FIG. 11 is a detailed view of the latch of the dock unit in accordance with the embodiment shown in FIG. 1;
FIGS. 12A-12C are detailed views of the latch of the dock unit being moved to the unlatched position in accordance with the embodiment shown in FIG. 1;
FIGS. 13A-13B are detailed view of the latch of the dock unit in accordance with an embodiment;
FIG. 14 is a detailed view of the latch of the dock unit in accordance with an embodiment;
FIG. 15 is a detailed view of a latch lock and release member in the first position that prevents a release member from being movable to release the latch;
FIG. 16 is a detailed view of a latch lock and release member in the second position that permits the release member to be movable to release the latch;
FIG. 17 is a detailed view of a latch member in the latched position and an attachment member in accordance with an embodiment; and
FIG. 18 is a detailed view of a latch member in the unlatched position in accordance with the embodiment of FIG. 15.

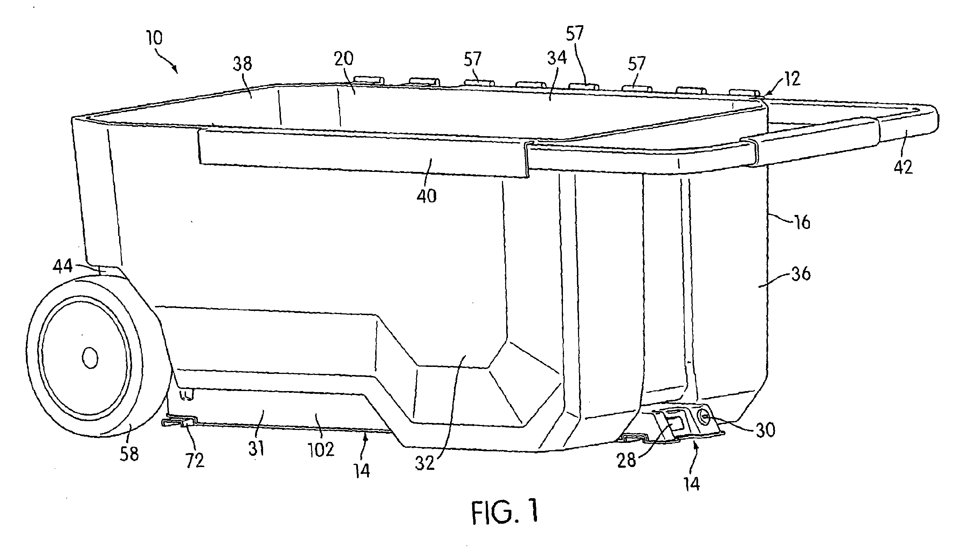

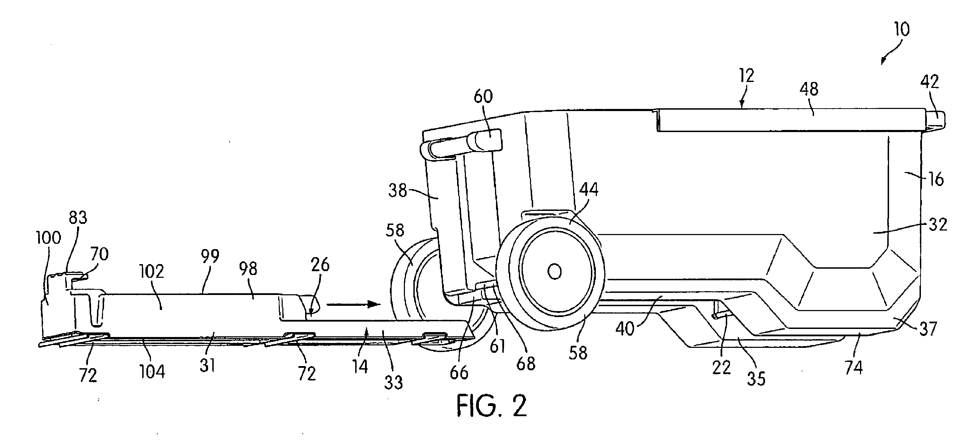

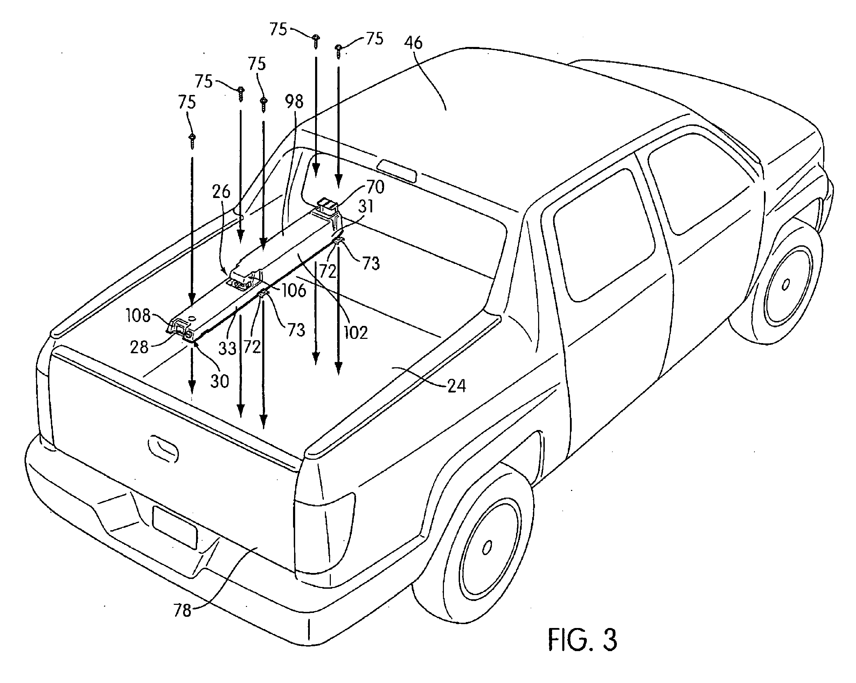

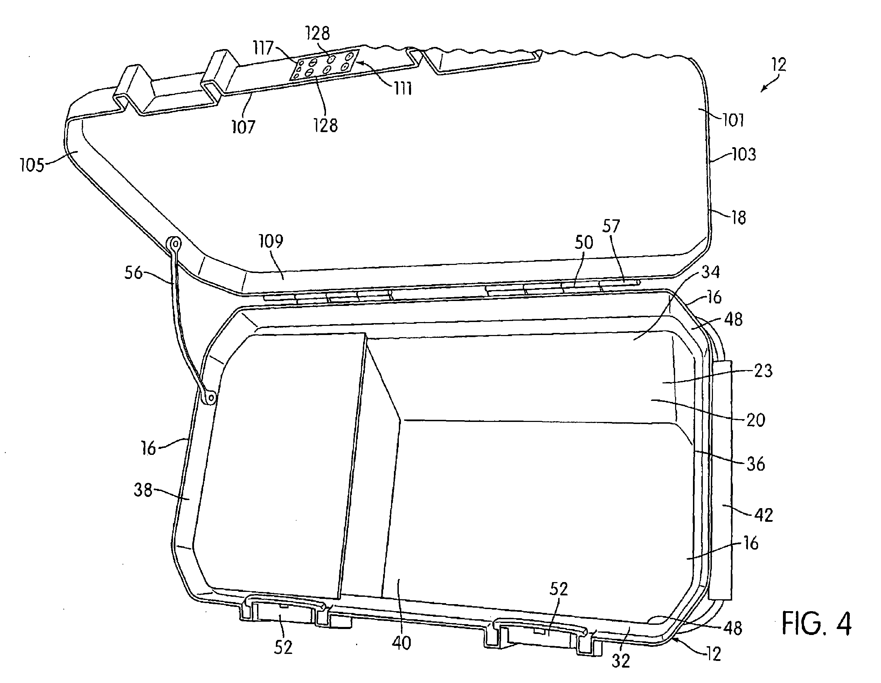

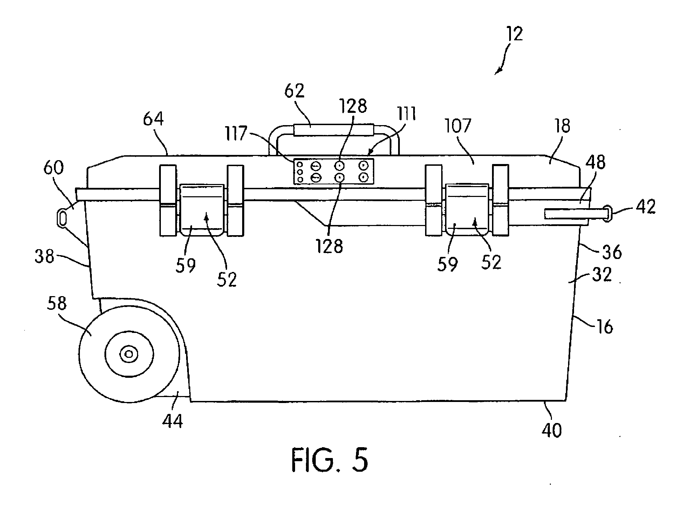

Figures 1 and 2 show a truck bed mountable storage system 10 in accordance with an embodiment of the present invention. The truck bed mountable storage system 10 includes a container unit 12 and a dock unit 14. The container unit 12 includes a cover 18 (see Figures 4 and 5) and a base container 16, or container portion, defining a storage space 20 for storing items. The cover 18 is movable between an open condition permitting access to the storage space 20 and a closed condition preventing access to the storage space 20. The container unit 12 also includes a latch engaging structure 22 (see Figure 2) used to latch the container 12 to the dock unit 14. The dock unit 14 is constructed and arranged to be fixed to a truck bed 24 (see Figure 3) and includes a latch 26 arranged to releasably lock the latch engaging structure 22 of the container unit 12 so as to releasably lock the container unit 12 to the dock unit 14.

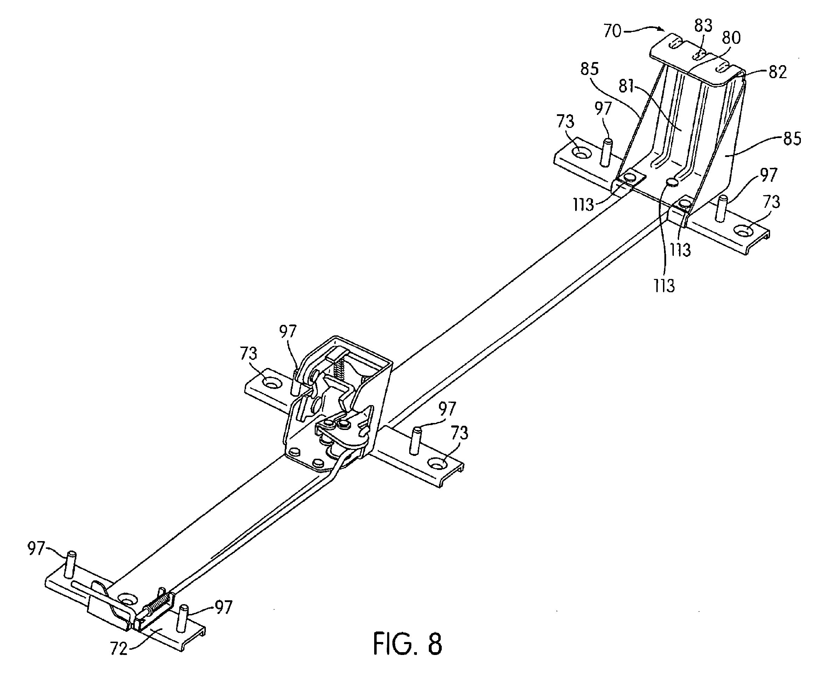

As shown in Figure 1, the dock unit 14 carries a release member 28 that is movable to release the latch 26 (see Figure 3) and thereby release the container unit 12 from the dock unit 14. As shown in Figure 2, the dock unit 14 includes a first portion 31 and a second portion 33 that extends from the first portion 31, the first portion 31 being at an elevated height relative to the second portion 33. The first portion 31 and the second portion 33 may be an integrally molded unit or may be separate units connected to one another. The dock unit 14 may include a top portion 99, a rear portion 100, two opposing side portions 102, and a bottom portion 104. As shown in Figure 3, the dock unit 14 may also include a first front portion 106 on the first portion 31, and a second front portion 108 on the second portion 33. Strengthening ribs (not shown) may optionally be provided in the dock unit 14. The top portion 99, the rear portion 100, the two opposing side portions 102, and the front portions 106, 108 may optionally define a cover 98 for the dock unit 14 that may optionally be made of plastic. The bottom portion 104 may optionally be made of metal. The cover 98 may be attached to the bottom portion 104 using screws 97 (six are shown in Figure 8). In one embodiment, the bottom portion 104 may be an elongated structure that extends along the entire length of the dock unit 14. The bottom portion 104 may serve as a base for the dock unit 14 so that other components of the dock unit 14 may be attached to the bottom portion 104, such as for example, the latch 26.

In some embodiments, the first portion 31 and the second portion 33 may be separate units that are separately attached to the truck bed 24. For example, a stop structure 70 (shown in Figure 2 and to be described later) may be carried on the first portion 31 fixed to the truck bed 24 and the latch 26 may be carried on the second portion 33 spaced away from the first portion 31 and fixed to the truck bed 24. In one embodiment, the latch 26 may be located at a junction between the first portion 31 and the second portion 33 of the dock unit 14. The dock unit 14 may also be made of metal, wood, or other materials known in the art, or a combination thereof

As shown in Figure 3, the dock unit 14 has truck bed engaging members 72 in the form of brackets (three are shown) extending from the dock unit 14. The truck bed engaging members 72 may be spaced apart along the sides 102 of the dock unit 14. In this embodiment, the truck bed engaging members 72 may have screw receiving openings 73 that are configured to receive screws 75 (five are shown in Figure 3) to mount the dock unit 14 to the truck bed 24. The dock unit 14 may optionally be fixed to other locations and vehicles, such as a van or truck bed. It is also contemplated that other mechanisms of mounting the dock unit 14 to the truck bed 24 may be used, such as, for example, adhesive bonding, fasteners, pins, hooks, or other attachment mechanisms known in the art.

As shown in Figure 3, the dock unit 14 includes a latch lock 30 that is constructed and arranged to be in a first condition that prevents the release member 28 from being movable to release the latch 26, or a second condition that permits the release member 28 to be movable to release the latch 26. In one embodiment, the latch lock 30 and the release member 28 may be disposed on the front portion 108 of the second portion 33 of the dock unit 14. The latch lock 30 will be described in more detail later.

Referring back to Figure 2, the container 12 includes a recess 35 formed in a bottom portion 37 of the container portion 16. At least a portion of the dock unit 14 (e.g., the lower portion 33) may be disposed within the recess 35 when the container 12 is mounted on and locked to the dock unit 14. The latch engaging structure 22 may be located in the recess 35. In one embodiment, one or more rollers 58, such as wheels, facilitate the rolling movement of the container 12. For example, the container 12 with the latch engagement structure 22 can be rolled into locking engagement with the latch 26 on the dock unit 14. In one embodiment, the container portion 16 has a sliding portion 74 that facilitates the sliding of the container 12 against the truck bed 24 when the container 12 is being mounted to the dock unit 14. The sliding portion 74 may be any portion of the container 12 that engages with or slides on the truck bed 24. In other embodiments, the container portion 16 may have additional rollers 58 instead of the sliding portion 74 to facilitate the rolling movement of the container 12 towards the dock unit 14. It is also contemplated that the location of the rollers 58 and the sliding portion 74 may vary and may be interchangeable.

As shown in Figure 4, the container portion 16 of the container unit 12 includes a pair of side walls 32 and 34, a rear wall 36, a front wall 38, and a bottom wall 40. The rear wall 36, the front wall 38 and the opposed side walls 32 and 34 are constructed and arranged to generally extend vertically upwardly from the bottom wall 40. The rear wall 36 and the front wall 38 are joined to each other by the opposed side walls 32 and 34 to form the aforementioned storage space 20. In one embodiment, the space in the container portion 16 has an upwardly facing opening 23. In one embodiment, the container portion 16 is formed from a suitable molded plastic material. In other embodiments, the container portion 16 may be made from other materials (e.g., wood, metal, etc.) as would be appreciated by one skilled in the art.

In one embodiment, the cover 18 may generally include a top wall 101, a front wall 105, a rear wall 103, and opposed side walls 107 and 109. The front wall 105, the rear wall 103 and the opposed side walls 107 and 109 are constructed and arranged to generally extend vertically downwardly from the top wall 101 (when the container 12 is resting on the ground as shown in Figure 5). In one embodiment, the cover 18 may be pivotally connected to the side wall 34 of the container portion 16 using hinge members 50. The pivotal movement may also be controlled by hinge guides 57, which may or may not provide for damped pivotal movement. The cover 18 may be secured in the closed position by at least one latch 52 (two are shown in Figure 4). By releasing the latch(es) 52, the cover 18 may be pivoted about the hinge members 50 to the open position to access the tools or articles stored in the storage space 20 of the container portion 16 of the container 12. In one embodiment, the latch 52 may include a pivotal latch member 59 (see Figure 5) that may be pivoted in an upward direction to disengage a latch engaging portion of the cover 18 so that the cover 18 may be opened to allow access to the contents of the container portion 16. The pivotal latch member 59 may be made of metal, plastic, wood, or other materials appreciated by one skilled in the art. In other embodiments, the cover 18 may be latched to the container portion 16 using buckles, hooks, bolts, or other locking mechanisms known in the art. Other types of covers are also contemplated, such as two pivoting half-covers, a sliding cover, an accordion type cover, just to mention a few.

The container unit 12 may also include a cover lock 111 operable to lock the cover 18 to the container portion 16. In some embodiments, the cover lock 111 may include a key cylinder. It is also contemplated that the cover lock 111 may be an electronic lock. In one embodiment, the cover lock 111 may include a solenoid, such as a two-directional solenoid. In one embodiment, a solenoid driver is used to provide solenoid control for the locking and unlocking the cover 18. In such embodiment, the solenoid driver may include two N-channel MOSFETs. Other locks may optionally be used. In one embodiment, the container 12 may have a cover lock 111 disclosed in EP09167302. As shown in Figures 4 and 5, the cover lock 111 includes a user interface panel 117 comprising a plurality of user-activated keys 128 that may be actuated to lock and unlock the cover lock 111. The passcode or combination code to unlock the cover lock 111 may optionally be changeable by the user. In one embodiment, the container 12 may optionally include an alarm that may be generated in response to unauthorized access to the contents of the container 12. Such features are disclosed in EP09167302. The alarm system, when in the activated state, is capable of outputting an alarm indication in response to a condition of the tool container. The alarm system can include a detector, a controller, a signaling device and a power supply. The detector may be configured to detect the condition of the tool container. The controller is preferably configured to receive an input signal from the detector based on the detected condition of the tool container. The signaling device is operatively connected to the controller and is configured to generate the alarm indication in response to receiving an output signal from the controller. The output signal from the controller is generated in response to the input signal from the detector. The power supply is configured for powering the detector and the signaling device. The lock may be a key lock or a combination lock. In one embodiment, the lock may be an electrically operated lock that is in communication (e.g. hard wired or wireless) with the controller.

In one embodiment, the cover 18 may be coupled to the rear wall 36 and/or the front wall 38 of the container portion 16 using at least one linkage member 56 (one is shown in Figure 4). The linkage members 56 are constructed and arranged to support the cover 18 when the cover 18 is in the open position. The linkage members 56 may also, or alternatively, be configured to act as a stop to limit the movement of the cover 18 beyond a maximum open position of the cover 18. In one embodiment, the linkage members 56 are made from a flexible material (such as a chain, wire, rope or string, for example) so that the linkage members 56 are in a slack configuration when the cover 18 is in the closed position. In another embodiment, the linkage members 56 may take the form of a two bar linkage, pin and slot arrangement, or other type linkage known in the art. In other embodiments, a sliding cover or a removable cover can be used.

As shown in Figure 5, the container 12 includes an extendable handle 42. The extendable handle 42 is operatively connected to the container portion 16 to facilitate tilted rolling transport of the container 12 on the rollers 58. The container portion 16 includes a pair of handle receiving portions formed near a top edge 48 along the opposing side walls 32 and 34. The handle receiving portions are constructed and arranged to receive the handle 42 therewithin, when the handle 42 is in a retracted position. In one embodiment, the handle receiving portions are hollow structures that are configured to telescopically receive legs of the handle 42 to enable extension and retraction respectively. The extendable handle 42 may be pulled to an extended position to facilitate tilted rolling transport of the container 12. The extendable handle 42 may have rubber material or other anti-slip material provided on its surface to facilitate grasping of the extendable handle 42. In some embodiments, the container 12 may optionally have a rear handle 60 disposed on the front wall 38 to facilitate the mounting and removal of the container 12 to and from the dock unit 14. In some embodiments, the rear handle 60 may have grooves and/or ridges provided along its surface to facilitate grasping of the rear handle 60. The rear handle 60 and the extendable handle 42 may optionally be made of metal, plastic, wood, or any materials known in the art, or combinations thereof.

In one embodiment, the rollers 58 are connected with the container portion 16 to enable transport of the container 12. As noted previously, in one embodiment, the rollers 58 may be in the form of wheels and may facilitate rolling transport of the container 12. In one embodiment, the rollers 58 are mounted in a recess 44 formed in the base container 12 so that the container 12 may be tilted and pulled or pushed along a horizontal surface (e.g., ground surface) by a user holding the handle 42. The rollers 58, in one embodiment, may optionally be locked against rolling motion by roller lock members that are operatively connected to the rollers 58 to provide a stationary configuration. In some embodiments, the rollers 58 may have rubber treads or other anti-slip material on the surface to provide traction when the container 12 is to be rolled from one place to another.

In one embodiment, each roller 58 is a molded structure reinforced by a plurality of wheel ribs (not shown) and each roller 58 is mounted on an end of an elongated axle 61 (see Figure 2) by two hubs or other appropriate structure. The axle 61 may be an elongated cylindrical metal shaft that is snap fit into a receptacle molded into container portion 16. Alternatively, the axle 61 can be mounted to the container 12 through a pair of axially aligned through-holes formed in the front wall 38 of the container portion 16. As shown in Figure 2, the axle 61 may be snap fit into rotational engagement with receiving structures 66 of the container portion 16. A portion of the axle 61 that is not held within the receiving structure 66 is exposed and defines a stop engaging structure 68 that is configured and arranged to engage with the stop structure 70 on the dock unit 14. That is, the stop engaging structure 68 is the portion of the axle 61 between the receiving structures 66. In other embodiments, the stop engaging structure 68 may optionally be a separate structure that is not defined by a portion of the axle 61 and may have other arrangements or configurations. For example, the stop engaging structure 68 may be a separate rod or shaft extending from the container portion 16.

In one embodiment, the container 12 may include a carrying handle 62 (see Figure 5). The carrying handle 62 is constructed and arranged to be attached to or integrally molded with a top surface 64 of the cover 18 as shown in Figure 5. In embodiments where a carrying handle 62 is used, the handle 42 and the rollers 58 may optionally be eliminated (and vice versa). The carrying handle 62 may include rubber or other anti-slip material on its surface to facilitate the carrying of the container 12.

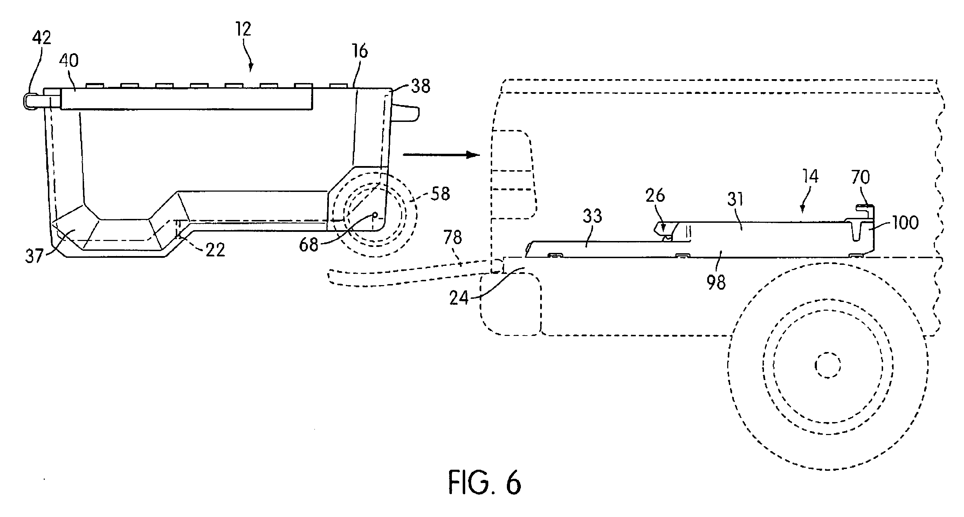

When the container 12 is to be mounted to the dock unit 14 fixed to the truck bed 24, the container 12 may initially be in a position relative to the dock unit 14 as shown in Figure 6. As shown in Figure 6, the container 12 is positioned such that the front wall 38 of the container portion 16 is facing the dock unit 14. The dock unit 14 is in the position wherein the second portion 33 is closer to the container 12 than the first portion 31.

As shown in Figure 6, the stop structure 70 is located on the first portion 31 near the rear portion 100 of the dock unit 14. In this embodiment, the stop engaging structure 68 is at an elevated height relative to the rest of the dock unit 14 such that when the stop engaging structure 68 is pushed towards the stop structure 70, the stop engaging structure 68 travels over upper surfaces of the second portion 33 and the first portion 31 before the stop engaging structure 68 engages with the stop structure 70. Also in this embodiment, the latch engaging structure 22 is at an elevated height relative to the second portion 33 of the dock unit 14 such that the latch engaging structure 22 travels over the upper surface of the second portion 33 as the latch engaging structure 22 is pushed towards the latch 26.

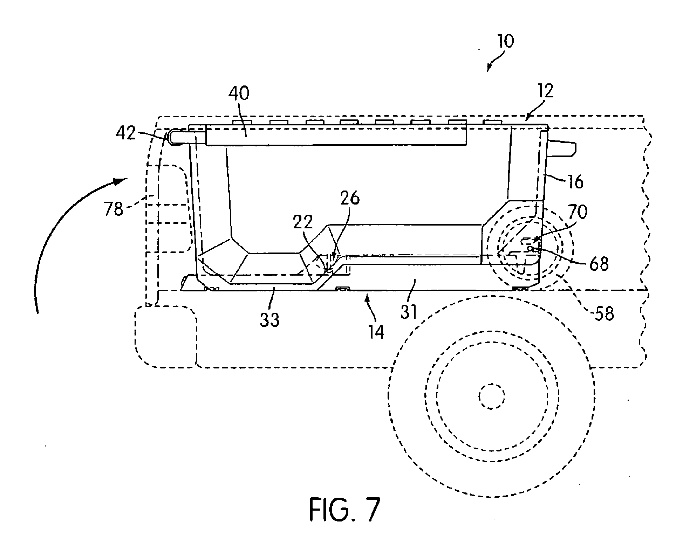

Figure 7 is a perspective view of the container 12 locked to the dock unit 14 in accordance with one embodiment. In this embodiment, the dock unit 14 is fixed to the truck bed 24. The dock unit 14 is positioned on the truck bed 24 such that the first portion 31 is closer to a cab 46 (see Figure 3) and the second portion 33 is closer to a bed door 78. When the bed door 78 is in the open position such that the truck bed 24 may be accessed at the rear of the bed 24, the container 12 may be removed from the dock unit 14 or may be mounted to the dock unit 14. The location and arrangement of the dock unit 14 on the truck bed 24 shown in this embodiment is not intended to be limiting and the arrangement and location of the dock unit 14 on the truck bed 24 may vary.

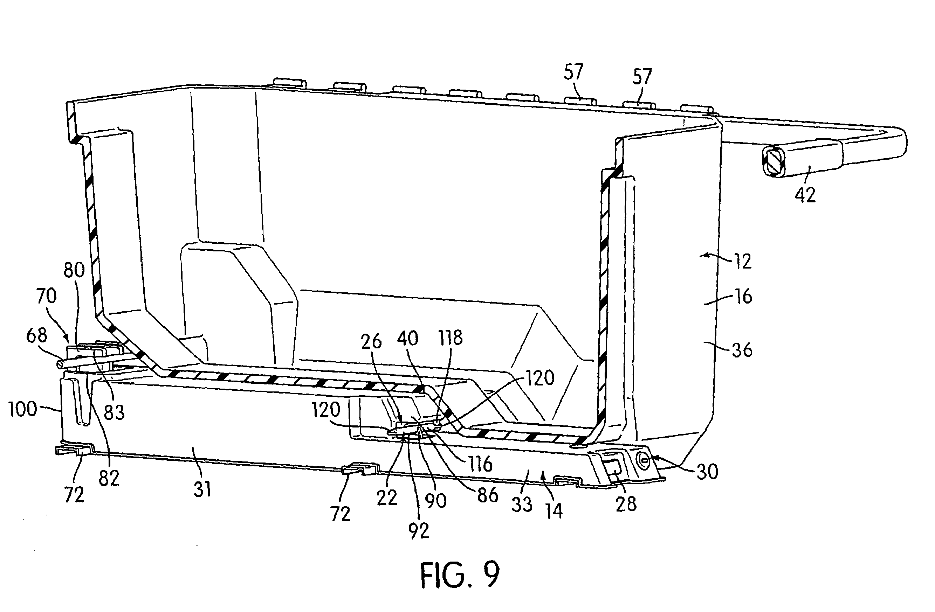

As shown in Figure 7, the stop engaging structure 68 is engaged with the stop structure 70, and the latch engaging structure 22 is engaged to the latch 26. In one embodiment, locking of the container 12 to the dock unit 14 can be accomplished without a stop structure 70 or stop engaging structure 68, and with the benefit of only one or more latches. In this embodiment, when the container 12 is locked to the dock unit 14, the second portion 33 of the dock unit 14 extends farther than the rear wall 36 of the container 12 to facilitate access to the release member 28 and the latch lock 30, as shown in Figure 9. When the container 12 is to be unlocked and removed from the dock unit 14, the container 12 may be pulled away from the dock unit 14 in a horizontal direction by the extendable handle 42.

In an embodiment in which a stop structure 70 is provided on the dock unit 14, the stop structure 70 may include a stop member 80 comprising a protrusion 83 or overhang (see Figure 8 for more details) that is positioned above a recess or groove 82 (see Figure 8) constructed and arranged to hold the stop engaging structure 68. The protrusion 83 of the stop structure 70 may operate to stop or inhibit upward movement of the stop engaging structure 68 when the stop engaging structure 68 is within the region below the protrusion 83 (e.g., when latch engaging structure 22 is engaged with latch 26), as shown in Figure 9. As shown in Figure 8, the stop member 80 is constructed and arranged to extend upwardly from the bottom portion 104 of the dock unit 14. The stop member 80 may be attached to the bottom portion 104 of the dock unit 14 via screws 113 (three are shown in Figure 8). The stop member 80 may have a main portion 81 and side portions 85 constructed to support the stop member 80 when the stop engaging structure 68 is pushed against the stop member 80. The stop member 80 may also be provided with strengthening ribs. In one embodiment, the protrusion 83 may have a curved sliding surface that may guide the stop engaging structure 68 into the groove 82. The stop member 80 of the stop structure 70 may be made of plastic or other materials known in the art.

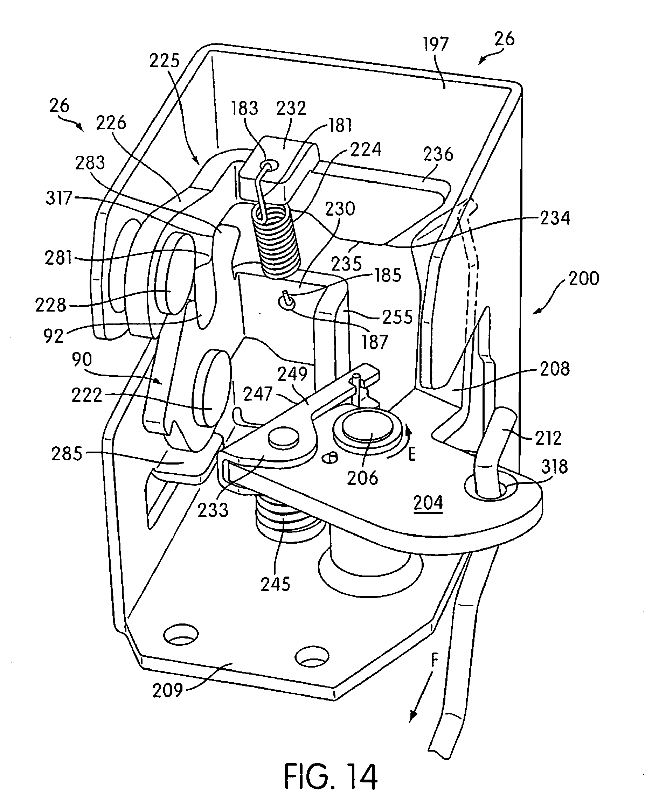

Figure 9 is a partial cross-sectional view of the container 12 mounted on the dock unit 14 with half of the container 12 and dock unit 14 removed to show details of the latch 26, the latch engaging structure 22, the stop structure 70, and the stop engaging structure 68. In this embodiment, the latch 26 is located at the junction between the first portion 31 and the second portion 33 of the dock unit 14. Portions of the latch 26 may be housed in the second portion 33 of the dock unit 14 and in an extension 86 extending from the first portion 31 of the dock unit 14. As shown in Figure 9, the stop engaging structure 68 may be held within the groove 82, wherein upward movement of the latch engaging structure 68 and further movement of the latch engaging structure 68 towards the rear portion 100 of the dock unit 14 are prevented by the protrusion 83 and the main portion 81 of the stop member 80, respectively. Also shown in Figure 9 is the latch engaging structure 22 engaged with the latch 26. In this embodiment, a generally U-shaped notch 92 of the latch member 90 is constructed and arranged to hold the latch engaging structure 22 when the latch member 90 is in a closed or latched position, thus preventing the latch engaging structure 22 from being removed from the latch 26. As used herein, the term "latched position" may refer to a closed position (see Fig. 14) of the latch 26 and the latch member 90, and does not mean that the latch engaging structure 22 must be latched to the latch 26 and/or received in the latch member 90 for the latch 26 and the latch member 90 to be in such a position. In other words, the latch 26 and the latch member 90 may be in the "latched position" as shown in Fig. 14 even if the latch engaging structure 22 is not latched to the latch 26 and/or received in the latch member 90. Portions of the latch member 90 surrounding the notch 92 may abut against the latch engaging structure 22 and prevent the latch engaging structure 22 from being removed from the latch 26, which will be described in more detail later.

As shown in Figure 9, the latch engaging structure 22 includes a rod 116 connected to bolts 118 (one is shown). The bolts 118 are constructed and arranged to pass through rings 120 extending from each side of the rod 116 to hold the rod 116 in place. Portions of each bolt 118 may be housed in a bolt receiving receptacle (not shown) extending from the bottom wall 40 of the container 12. The latch engaging structure 22 may have other configurations and/or arrangements and may be attached to the container 12 using other mechanisms. For example, the latch engaging structure 22 may include hooks rather than the rod 116. The latch engaging structure 22 may also be connected to the container 12 using screws, adhesive bonding, fasteners, or other attachment mechanisms known in the art. It is also contemplated that the bolts 118 (e.g., threaded bolts) may be extendable such that the height of the rod 116 may vary depending on an angle at which the container 12 is to be tilted when locked to the dock unit 14.

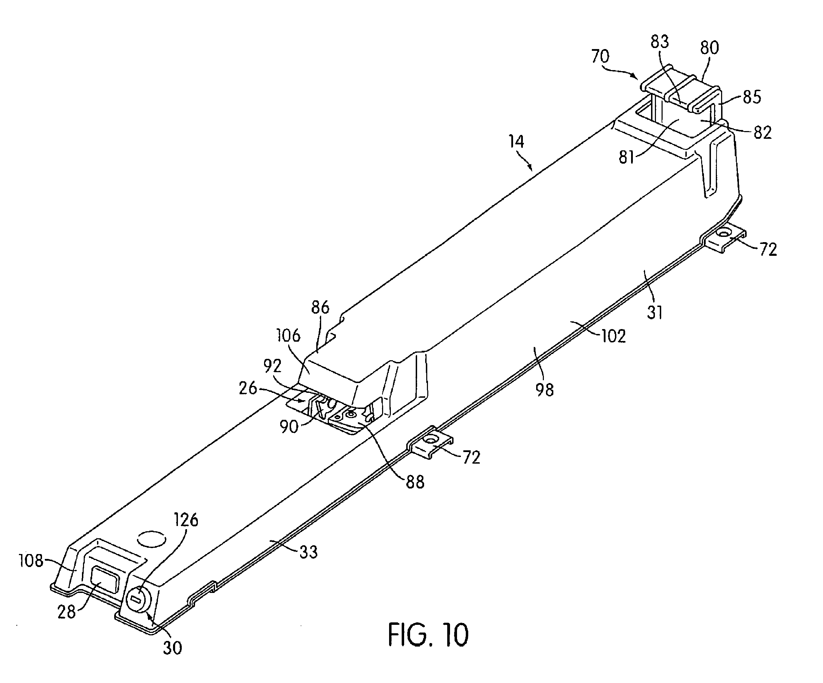

As shown in Figure 10, a recess 88 is formed between the extension 86 and the second portion 33 of the dock unit 14, and a portion of a latch member 90 is located in the recess 88. The latch 26 may optionally have other configurations or arrangements. For example, the latch member 90 of the latch 26 may be attached to the first portion 31 only and the notch 92 may have other shapes.

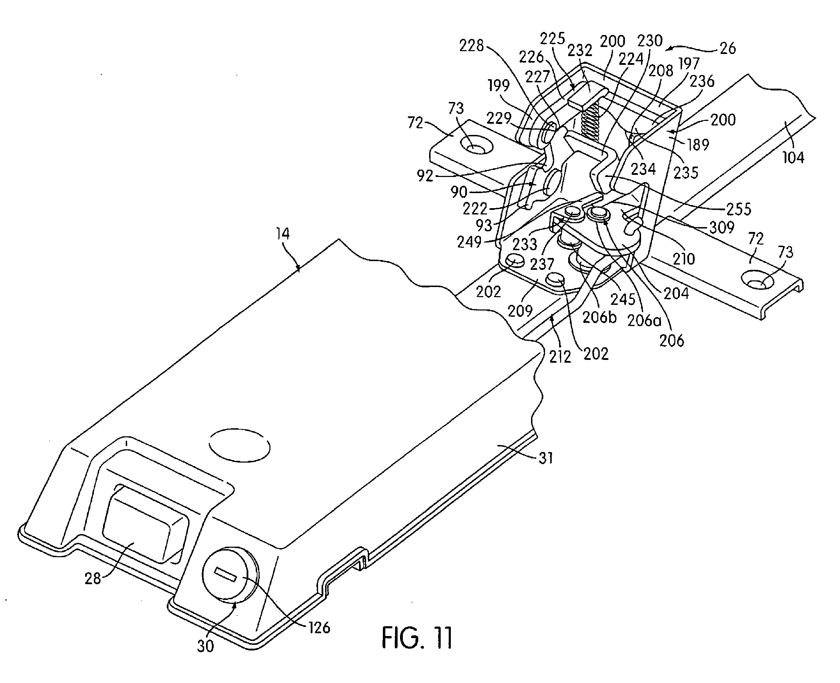

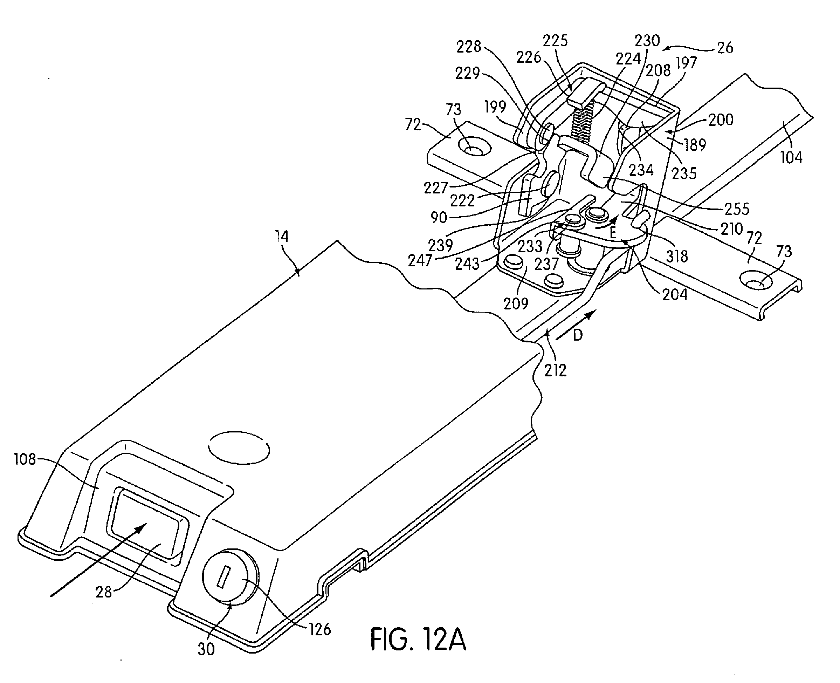

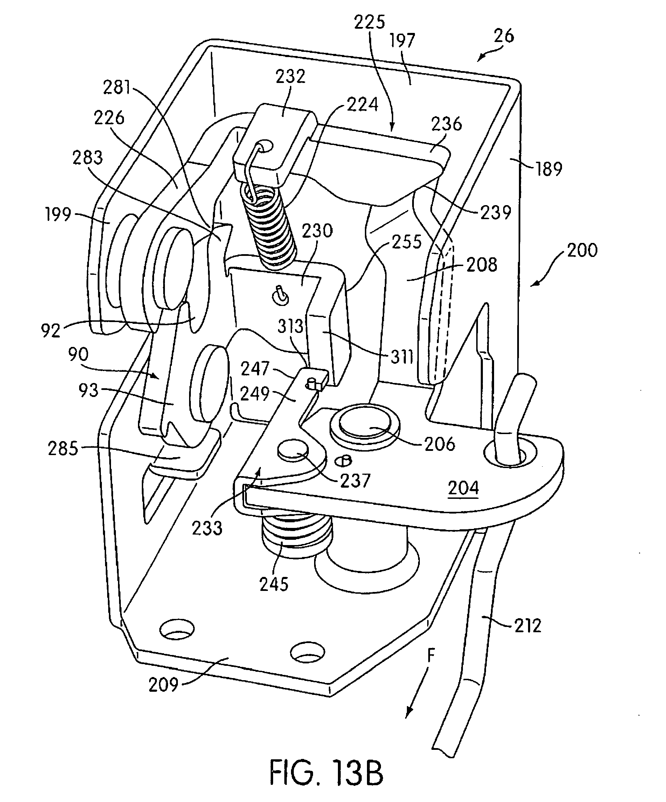

Figure 11 is a perspective view of the latch 26 with a portion of the upper surfaces of the dock unit removed to show details of the latch 26. The latch 26 is moveable between a latched or closed position (see Fig. 14) that prevents the removal or insertion of the latch engaging structure 22 and an unlatched or open position (see Figs. 12A-12C) that permits the removal or insertion of the latch engaging structure 22. In some embodiments, the latch 26 may also include an intermediate position (see Fig. 13B) that permits the latch engaging structure 22 to be removed but not inserted. These positions will be described in more detail later.

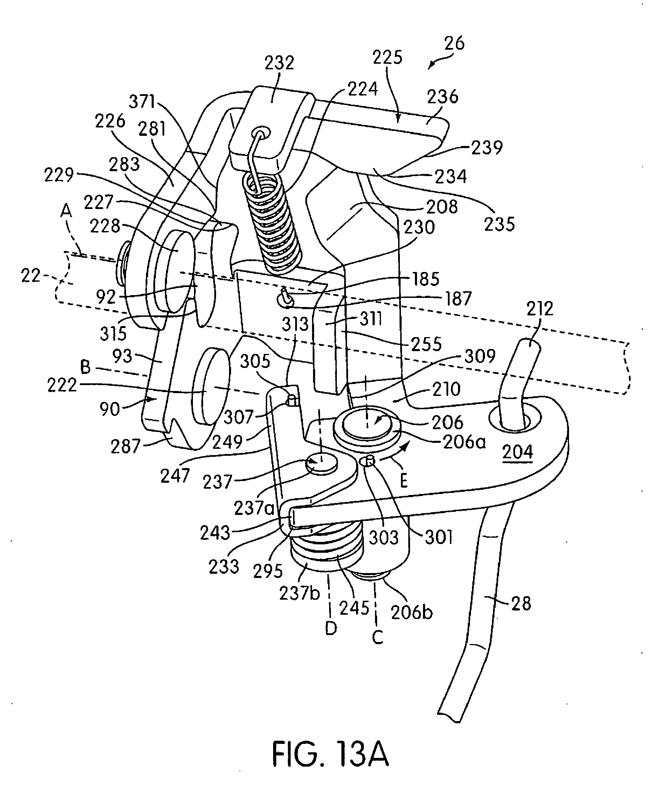

In this embodiment, the components of the latch 26 may be disposed on or in a receptacle 200 which may be attached to the bottom portion 104 of the dock unit 14. In this embodiment, the receptacle may include a back wall 197 and two side walls 189, 199. The receptacle 200 may also include a bottom wall 209 that is attached to the bottom portion 104 of the dock unit 14 via screws 202 (two are shown). The latch 26 may include an actuating member 204 that may be rotatably attached to the receptacle 200 via a pin 206. As shown in Fig. 13A, the actuating member 204 may have a camming portion 208 extending upwardly from a base portion 210 of the actuating member 204. Accordingly, the actuating member 204 and the camming portion 208 may be pivoted along axis C defined by the pivot pin 206. The camming portion 208 is constructed and arranged to contact a contact surface 234 of a contacting member 236 when pivoting the latch member 90 from the latched position (see Fig. 14) and the intermediate position (see Fig. 13B) to the unlatched position (see Fig. 12A). In this embodiment, the pivot pin 206 includes an upper portion 206a and a lower portion 206b. The pivot pin 206 connects the actuating member 204 to the bottom wall 209 of the receptacle 200. This may be accomplished by connecting the lower portion 206b of the pin 206 to the bottom wall 209 of the receptacle 200 (see Fig. 11).

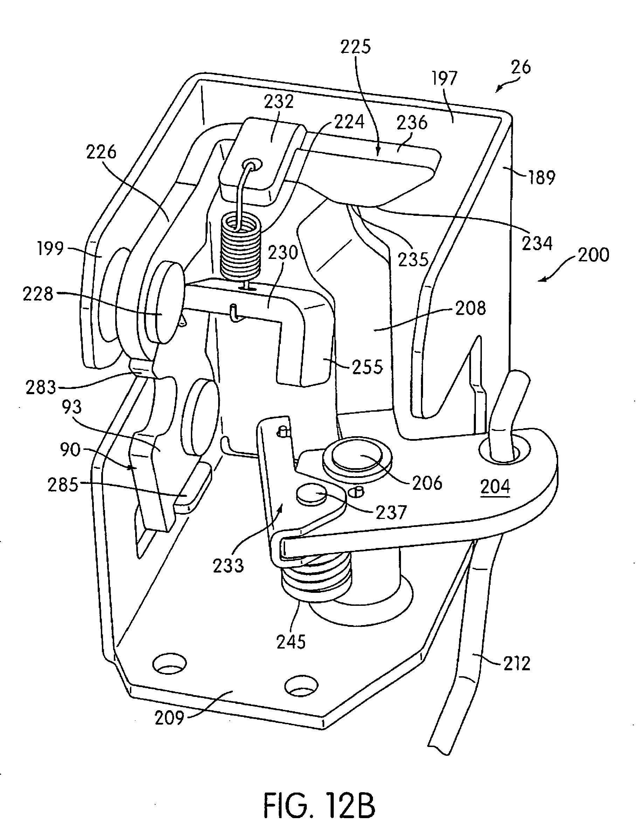

In one embodiment, a stop member 233 may be rotatably attached to the actuating member 204 via a pin 237. As shown in Fig. 13A, the stop member 233 may be pivoted about axis D defined by the pin 237 in a limited manner. That is, the stop member 233 may be rotated in the clockwise direction, but an edge 309 of the actuating member 204 may prevent the stop member 233 from being further rotated. The stop member 233 may include a groove 295 (see Fig. 13A) profile formed therein. As shown in Fig. 13, the groove 295 is constructed and arranged to receive a portion of the actuating member 204. The pin 237 may include a top portion 237a (see Fig. 13A) and a bottom portion 237b (see Fig. 13A). A spring 245 may be operatively connected to the pin 237 and used to rotationally bias the stop member 233 against a left side 243 of the actuating member 204 in a default position. In the embodiment shown in Fig. 13A, the spring 245 is located between the top portion 237a and the bottom portion 237b of the pin 237. A tang 301 on one end of the spring 245 is received in a hole 303 formed on the actuating member 204 to attach the spring 245 to the actuating member 204. A tang 305 on the other end of the spring 245 is received in a hole 307 formed in an extension 249 of the stop member 233. When no external force is applied to the stop member 233 to rotate the stop member 233 towards the camming portion 208, the spring 245 will bias the stop member 233 to the default position, for example, as shown in Figs. 13A and 12B.

Referring back to Fig. 12A, the actuating member 204 may be operatively connected to the release member 28 via a connector 212. In this embodiment, an S-curved portion of the connector 212 is constructed and arranged to be received in an opening 318 in the actuating member 204. This connection between the connector 212 and the actuating member 204 enables the actuating member 204 to be rotated in the counterclockwise direction (in the direction of E) when the connector 212 is pushed in the direction of D towards the extended position (by depressing the release member 28). This connection between the connector 212 and the actuating member 204 also enables the actuating member 204 to be rotated in the clockwise direction when the connector 212 is retracted back to the retracted position after the release member 28 has been released.

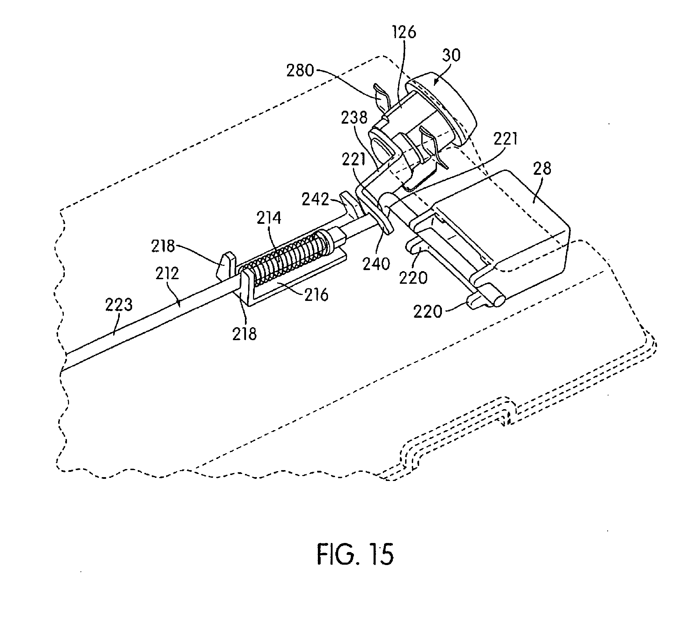

As shown in Fig. 15, the connector 212 may be a rod or wire, just for example, a metal rod, Bowden cable, or other connecting mechanisms known in the art. The connector 212 may be operatively connected to a spring 214 that is constructed and arranged to bias the connector 212 in a retracted position. The release member 28 may be depressed to move the connector 212 against the bias of the spring 214 to an extended position. The connector 212 may also have an intermediate position between the extended position and the retracted position. The connector 212 may be in the intermediate position when the latch 26 is also in the intermediate position, which will be described in more detail later.

In the embodiments shown in Figures 15-16, the release member 28 may be operatively connected to the connector 212. A portion of the connector 212 may be snap fit into a receptacle 220 molded into the release member 28, although other attachment mechanisms known in the art may be used. The connector 212 may include a transition portion 221 wherein the connector 212 begins to extend upwardly and then perpendicularly from the main portion of the connector 212.

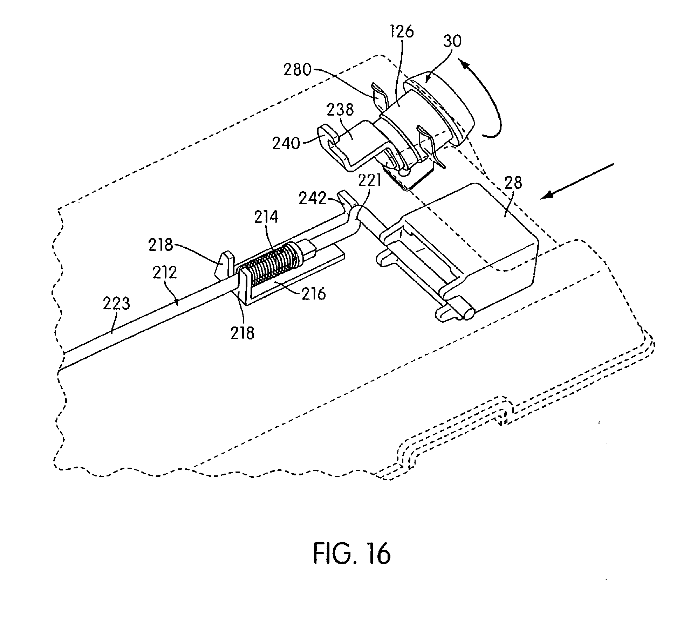

In one embodiment, as shown in Figure 16, when the release member 28 is depressed or actuated, the release member 28 may be fully retracted into the dock unit 14. As shown in Figure 15, the spring 214 and a portion of the connector 212 may be held on a platform 216 having fingers 218 extending upwards to hold the spring 214 and connector 212. In this embodiment, the fingers 218 enable the spring 214 to be compressed (shown in Figure 16) when the release member 28 is depressed. Depressing the release member 28 moves the connector 212 to the extended position. When the release member 28 is released, the spring 214 may snap the release member 28 back, which in turn pulls the connector 212 back to the retracted position.

Referring back to Figure 11, the latch member 90 may be pivotally attached to the dock unit 14 using a pivot pin 222, although other attachments mechanisms known in the art may be used. In this embodiment, a latch portion 93 of the latch member 90 is connected to the dock unit 14 via the pivot pin 222. A connecting member 230 is constructed and arranged to connect the extending member 255 to the latch portion 93. The latch portion 93, the connecting member 230, and the extending member 255 may be integral and may form the latch member 90. The latch member 90 may generally have a U-shaped configuration. As shown in Fig. 13A, the latch portion 93, the connecting member 230, and the extending member 255 of the latch member 90 may be rotated along axis B defined by the pin 222. In this embodiment, a spring 224 may operatively attach an attachment portion 232 of an upper member 225 to the connecting member 230 of the latch member 90. As shown in Fig. 14, a tang 181 on one end of the spring 224 is constructed and arranged to be received in a hole 183 formed on the attachment portion 232 to attach the spring 224 to the attachment portion 232. A tang 185 on the other end of the spring 224 is constructed and arranged to be received in a hole 187 formed on the connecting member 230 to attach the spring 224 to the connecting member 230.

The attachment portion 232, an attachment member 226, and a contacting member 236 may be integral and may form the upper member 225. The upper member 225 may have a generally L-shaped configuration that pivots about axis A (see Fig. 13A) defined by a pivot pin 228. As such, the contacting member 236 may be constructed and arranged to pivot upwardly via the pivot pin 228.

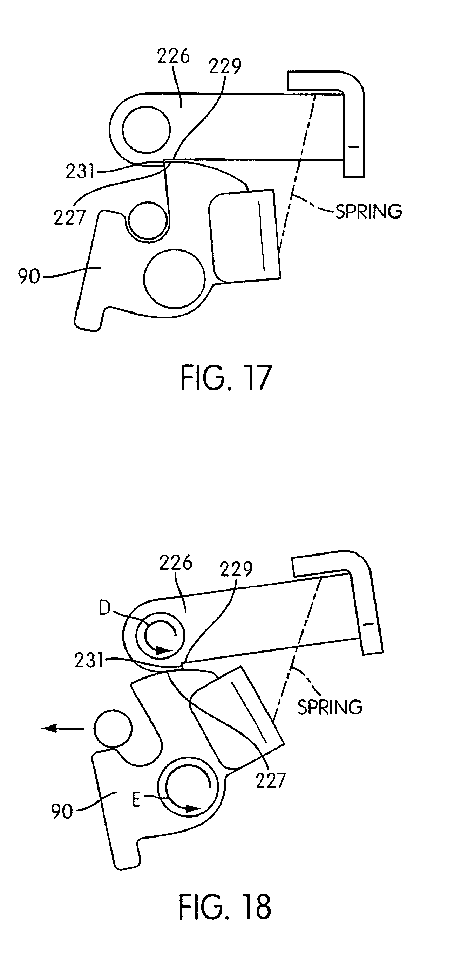

In one embodiment, the latch portion 93 of the latch member 90 and the attachment member 226 may comprise contact surfaces 227, 229, respectively, that contact each other during rotation of the latch member 90. In the embodiment shown in Fig. 13A, the attachment member 226 includes a protrusion 281 near the contact surface 229 that is configured and arranged to contact the edge 283 of the latch member 90 to prevent the latch member 90 from rotating back to the unlatched position. The friction between the protrusion 281 and the edge 283 may help prevent the latch member 90 from rotating back to the unlatched position. The attachment member 226 may also have other shapes or configurations on a portion that contacts the latch member 90 to prevent the counterclockwise rotation of the latch member 90 back to the unlatched position from the latched position. For example, in one embodiment, there may optionally be teeth 231 (see Figs. 17 and 18) on or near one or both of the contact surfaces 227, 229 that engages one another to prevent the counterclockwise rotation of the latch member 90. As shown in Fig. 18, when the attachment member 226 is lifted by the camming portion 208, the teeth no longer engages and thus no longer impede the counterclockwise rotation of the latch member 90.

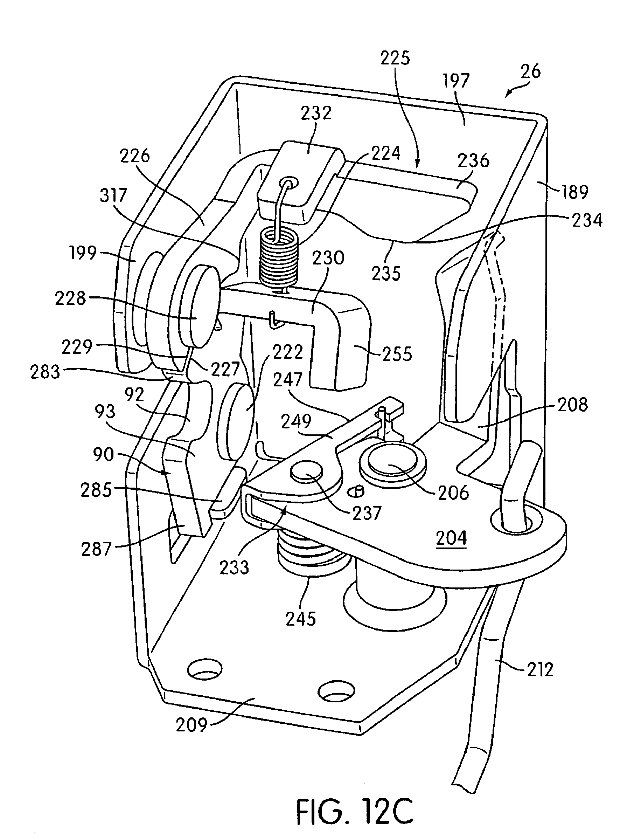

Fig. 12C shows the latch 26 in the unlatched position and the connector 212 in the default, retracted position. In this embodiment, when the connector 212 is in the retracted position, the actuating member 204 is also in its default position, wherein the camming portion 208 is positioned to the right of the contacting member 236. The stop member 233 is in its default position against the actuating member 204. The stop member 233 and the actuating portion 204 are aligned with the extending member 255 such that when the extending member 255 is pivoted in the clockwise direction and is lowered during the latching process (which will be described in more detail later), the extending member 255 may come into contact with the edge 247 of the stop member 233. When the latch 26 is in the unlatched position, the contacting member 236 is in the lowered position and the connecting member 230 is in a lifted position, and thus, the spring 224 attached thereto is in its relaxed state. As shown in Fig. 12C, the edge 283 of the latch portion 93 may be positioned such that the edge 283 is not in contact with the surface 229 of the attachment member 226. Instead, the surface 227 of the latch portion 93 may be in contact with the surface 229 of the attachment member 226 when the latch 26 is in the unlatched position. The latch 26 may be prevented from further counterclockwise rotation by a ledge 285 extending from side wall 199 of the receptacle 200. A lower surface 287 of the latch member 90 may abut against the ledge 285 to prevent further counterclockwise rotation of the latch member 90.

Fig. 13B shows the latch 26 in the intermediate position and the connector 212 in the intermediate position. In this embodiment, when the connector 212 is in the intermediate position, the actuating member 204 is also in its intermediate position, wherein the camming portion 208 contacts a right edge 239 of the contacting member 236. When the latch 26 is in the intermediate position, the protrusion 281 of the attachment member 226 contacts the edge 283 of the latch portion 93. As mentioned above, the friction between the protrusion 281 and the edge 283 prevents the latch member 90 from rotating in the counterclockwise direction to the unlatched position. The stop member 233 may be constructed and arranged to prevent further clockwise rotation of the latch member 90 by contacting the extending member 255 of the latch member 90 with the extension 249 of the stop member 233, as shown in Fig. 13B. Specifically, an end surface or edge 311 of the extending member 255 of the latch member 90 may abut against an end surface 313 of the extension 249 of the stop member 233 to prevent the latch 26 from further rotating in the clockwise direction. As shown in Fig. 13B, the connecting member 230 and extending member 255 are in the intermediate position when the latch member 26 is in the intermediate position. When the connecting member 230 is in the intermediate position, as shown in Fig. 13B, the spring 224, which is attached to the connecting member 230 and the attachment portion 232, biases the attachment portion 232, the contacting member 236, and the attachment member 226 downwards towards an intermediate position, as shown in Fig. 13B. This configuration enables the protrusion 281 of the attachment member 226 to contact the edge 283 of the latch portion 93. The release member 28 may also be in an intermediate position (not shown) between a fully released position (see Fig. 15) and the retracted position (see Fig. 16) when the latch 26 is in the intermediate position.

Fig. 14 shows the latch 26 in the latched position and the connector 212 in the default, retracted position. In this embodiment, when the connector 212 is in the retracted position, the actuating member 204 is also in its default position, wherein the camming portion 208 is positioned to the right of the contacting member 236. As shown in this Figure, when the latch 26 is in the latched position, a portion of the extending member 255 may be in contact with the edge 247 of the stop member 233. In this embodiment, the connecting member 230 and the extending member 255 are rotated further in the clockwise direction when the latch 26 is in the latched position than in the intermediate position. The connecting member 230 is in the lowered position, and thus, the spring 224 biases the contacting member 236 of the upper member 225 downward towards the lowered position. This configuration enables the edge 283 of the latch portion 93 to be received in a groove 317 of the attachment member 226. The engagement between the edge 283 and the groove 317 prevents the latch member 90 from rotating counterclockwise to the unlatched position.

The movement of the latch 26 from the unlatched position to the latched position will be described as follows with respect to the embodiment shown in Figs. 12C and 14. In some embodiments, for the latch 26 to be able to be moved to the latched position, the latch 26 must initially be in the unlatched position as shown in Fig. 12C. In such embodiments, the latch 26 cannot be moved to the latched position from the intermediate position. To move the latch 26 to the latched position, the latch engaging structure 22 may be inserted into the notch 92 of the latch member 90 and then pushed inward in the direction towards the back wall 197 of the receptacle 200. As the latch engaging structure 22 is pushed inward, the latch engaging structure 22 causes the latch member 90 to rotate via the pin 222 in the clockwise direction towards the latched position such that the contact surface 227 of the latch member 90 slides against the contact surface 229 of the attachment member 226. The spring 224 becomes extended as the connecting member 230 of the latch member 90 is rotated downward. The contact between the contact surface 227 of the latch member 90 and the contact surface 229 of the attachment member 226 prevents the contacting member 236 from being moved downward by the bias of the spring 224. The latch member 90 is rotated in the clockwise direction until the edge 283 snaps into the groove 317 and is retained by the groove 317, as shown in Fig. 14. This engagement between the edge 283 and the groove 317 prevents the spring 224 from pulling the upper member 225 downward via the attachment portion 232 and prevents the spring 224 from pulling the latch member 90 upward via the connecting member 230. Accordingly, this configuration enables the latch member 90 from rotating back to the unlatched position. As mentioned above, the stop member 233 is constructed and arranged to prevent the latch member 90 from being rotated further in the clockwise direction. When the latch member 90 has been rotated sufficiently to the latched position, the extending member 255 of the latch member 90 contacts the left edge 247 of the stop member 233 and is thus prevented from being further rotated in the clockwise direction. When the latch 26 is in the latched position, the latch engaging structure 22 cannot be removed from the latch 26 by simply pulling in the direction of F because of the engagement between the edge 283 of the latch member 90 and the surface of the groove 371 of the attachment member 226.

The movement of the latch 26 from the latched position to the unlatched position will be described as follows with respect to the embodiment shown in Figs. 14, 12B, and 12C. The latch 26 may initially be in the latched position as shown in Fig. 14 and the latch engaging structure 22 may be received in the notch 92 of the latch member 90. To unlatch the latch 26, the user may depress or actuate the release member 28, which moves the connector 212 to the extended position. As mentioned above, moving the connector 212 to the extended position rotates the actuating member 204 in the direction of E. The rotation of the actuating member 204 also causes the camming portion 208 to rotate towards the contact surface 234 of the contacting member 236. As the connector 212 is further extended and the actuating member 204 is further rotated, the camming portion 208 is pushed along the contact surface 234. Additionally, the stop member 233 is pushed against a portion of the extending member 255 of the latch member 90 and against the bias of the spring 245. Meanwhile, the contacting member 236 of the upper member 225 is biased downward in the lowered position by the spring 224. To move the latch 26 to the unlatched position, the user must push the connector 212 against at least the force of the spring 214 (see Fig. 16), the force of the spring 245, the force of the spring 224, the friction between the camming portion 208 and the contact surface 234 of the contact member 236, and the friction between the edge 283 of the latch member 90 and the surface of the groove 371 of the attachment member 226. As the connector 212 is pushed further towards the extended position, the camming portion 208 slides against the contact surface 234 of the contact member 236 until the camming portion 208 can overcome the force of the spring 224 and can contact the lower portion 235 of the contact member 236 to lift the upper member 225, as shown in Fig. 12B. The actuating member 204 is prevented from further rotation by the contact between the actuating member 204 and the side wall 189 of the receptacle 200 and the contact between the camming portion 208 and the extending member 255 of the latch member 90, as shown in Fig. 12B. When the upper member 225 is lifted, the attachment member 226 is lifted and thus the groove 371 of the attachment member 226 is removed from engagement with the edge 283 of the latch member 90. When the release member 28 has been fully depressed, or in other words, the connector 212 is in the fully extended position, the user may then pull the container 12 in the direction of F so that the latch engaging structure 22 on the container 12 may be removed from the notch 92 of the latch engaging structure 22. After the latch engaging structure 22 is no longer received in the notch 92 of the latch member 90, the spring 224 snaps the latch member 90 upward and rotates the latch member 90 towards the unlatched position. The contact surface 227 of the latch member 90 may slide against the contact surface 229 of the attachment member 226 when the latch member 90 is rotated to the unlatched position. After the extending member 255 of the latch member 90 has been rotated in the counterclockwise direction and is no longer contacting the stop member 233, the spring 245 is able to snap the stop member 233 back to its default position. In some embodiments, the container 12 may be light enough such that the spring 224 may rotate the latch member 90 to the unlatched position and cause the latch engaging structure 22 and the container 12 to be pushed out of the latch 26 so that the latch 26 may move to the unlatched position. The latch member 90 is prevented from further counterclockwise rotation by the ledge 285. After the latch engaging structure 22 has been removed from the notch 92 of the latch member 90 and the release member 28 has been fully released, the spring 214 snaps the connector 212 back to the retracted position and the actuating member 204 back to its default position to achieve the unlatched position as shown in Fig. 12C.

The movement of the latch 26 from the latched position to the intermediate position will be described as follows with respect to the embodiment shown in Figs. 14, 13A, and 13B. The latch 26 may initially be in the latched position as shown in Fig. 14 and as described above. The latch engaging structure 22 may be held within the notch 92 of the latch member 90. The release member 28 may be depressed to move the latch 26 as described above. For example, in this embodiment, the user must push the connector 212 against at least the force of the spring 214 (see Fig. 16), the force of the spring 245, the force of the spring 224, the friction between the camming portion 208 and the contact surface 234 of the contact member 236, and the friction between the edge 283 of the latch member 90 and the groove 371 of the attachment member 226. As the connector 212 is pushed further towards the extended position, the camming portion 208 slides against the contact surface 234 of the contact member 236 until the camming portion 208 can overcome the force of the spring 224 and can contact the lower portion 235 ot the contact member 236 to lift the upper member 225, as shown in Fig. 13A. The upper member 225 may then be lifted, thus enabling the edge 283 of the latch member 90 to exit the groove 371 of the attachment member 226. However, in some situations, the latch engaging structure 22 may be kept in the notch 92 of the latch member 90, as shown in Fig. 13A. For example, the container 12 may be sufficiently heavy or the user may push the container 12 into the latch 26 with sufficient force such that the latch member 90 is maintained in the latched position as shown in Fig. 13A. When the user releases the release member 28, the spring 214 (see Fig. 16) snaps the connector 212 to the intermediate position and the actuating member 204 to the intermediate position. The actuating member 204 is rotated clockwise towards its intermediate position until the end surface 313 of the stop member 233 is contacting the end surface 311 of the extending member 255, as shown in Fig. 13B. Simultaneously, the camming portion 208 moves along the contact surface 234 until the camming portion 208 is no longer contacting the lower portion 235 of the contacting member 236. The camming portion 208 may instead contact the edge 239 of the contacting member 236, as shown in Fig. 13B. As such, the upper member 225, including the contacting surface 236, is able to be lowered to its intermediate position by the spring 224. Accordingly, when the attachment member 226 is lowered to the intermediate position, the edge 283 of the latch member 90 engages with the protrusion 281 of the attachment member 226. The latch engaging structure 22 may thus be retained in the latch 26 in this intermediate position.

In this embodiment, the stop member 233 functions to prevent further rotation of the actuating member 204 in the clockwise direction so that the camming portion 208 remains in contact with the edge 239 of the contacting member 236. The friction resulting from the contact between the edge 313 of the stop member 233 and the edge 311 of the extending member 255 may help prevent the actuating member 204 from rotating further clockwise. In contrast, when the latch 26 is in the latched position, the camming portion 208 is located to the right of the contacting member 236, which enables the upper member 206 to be lowered sufficiently so that the edge 283 of the latch member 90 is received in the groove 371 of the attachment member 226. Instead, when the latch 26 is in the intermediate position, the upper member 225 is in its intermediate position and the latch member 90 is in its intermediate position, so that the protrusion 281 of the attachment member 226 contacts the edge 283 of the latch member 90.

The movement of the latch 26 from the intermediate position to the unlatched position will be described as follows with respect to the embodiment shown in Figs. 13B and 13A. In this embodiment, the latch 26 may be moved from the intermediate position to the unlatched position in two ways. First, the latch 26 may be moved to the unlatched position from the intermediate position by the user pulling on the container 12 in the direction of F, thus pulling the latch engaging structure 22 in the same direction. This causes the latch engaging structure 22 to push against portion 315 of the notch 92. When sufficient force has been applied in pulling the latch engaging structure 22 in the direction of F, the edge 283 may be removed from its engaging position with the protrusion 281 of the attachment member 226. The latch member 90 may then be permitted to rotate upwards and in the counterclockwise direction towards the unlatched position by the spring 224. The contact surface 227 of the latch member 90 may slide against the contact surface 229 of the attachment member 226 when the latch member 90 is rotated to the unlatched position. In one embodiment, the contact between the surface 227 of the latch member 90 and the surface 229 of the attachment member 226 may lift the upper member 225. As mentioned above, the spring 214 may then snap the connector 212 back to its default, retracted position.

The latch 26 may also be moved to the unlatched position from the intermediate position by the user depressing the release member 28. When the user depresses the release member 28, the connector 212 is pushed towards its extended position. As the connector 212 is pushed further towards the extended position, the camming portion 208 slides against the contact surface 234 of the contact member 236 until the camming portion 208 can overcome the force of the spring 224 and can contact the lower portion 235 of the contact member 236 to lift the upper member 225, as shown in Fig. 13A. When the upper member 225 is lifted, this may enable the edge 283 of the latch member 90 to disengage from the protrusion 281 of the attachment member 226. The user may then pull the container 12 and the latch engaging structure 22 in the direction of F. After the latch engaging structure 22 is no longer received in the notch 92 of the latch member 90, the spring 224 snaps the latch member 90 upward and rotates the latch member 90 towards the unlatched position. After the latch engaging structure 22 has been removed from the notch 92 of the latch member 90 and the release member 28 has been fully released, the spring 214 snaps the connector 212 back to the retracted position and the actuating member 204 back to its default position to achieve the unlatched position as shown in Fig. 12C.

The latch 26 may optionally have other configurations or arrangements. For example, in one embodiment, the camming portion 208 of the actuating member 204 may be constructed and arranged to push against the connecting member 230 of the latch member 90 to rotate the latch member 90 around the pivot pin 222 in a counterclockwise direction.

Figures 15 and 16 show the release member 28 and the latch lock 30 in more detail. The latch lock 30 may include a key (not shown) and a key cylinder 126. The key is associated with the key cylinder 126 and the same key may optionally be used to lock and unlock the cover 18 to the container portion 16. In one embodiment, the key may be used to manually override the cover lock 111 of the container portion 16 so that the cover 18 may be opened to enable access to the contents of the container portion 16. The latch lock 30 is not limited to the one shown in this embodiment. For example, a combination lock or an electronic lock may be used. It is also contemplated that in some embodiments, the latch lock 30 may include an RFID reader such that the latch lock 30 may only be unlocked when an RFID tag or transponder is recognized. As shown in Figures 15-16, the key cylinder 126 may be attached to the dock unit 14 using a spring clip 280, although other attachment mechanisms may be used.

As shown in Figures 15 and 16, the latch lock 30 is constructed and arranged to be in the first condition that prevents the release member 28 from being movable to release the latch 26, or the second condition that permits the release member 28 to be movable to release the latch 26. The key can be used to move the latch lock 30 to the first condition or the second condition. When the latch lock 30 is in the first condition, the release member 28 may not be actuated and thus the latch member 90 may not be rotated. Figure 15 shows a detailed view of the latch lock 30 in the first condition that prevents the actuation of the release member 28. As shown in Figure 15, an interference member 238 may be attached to the key cylinder 126. In this embodiment, the interference member 238 is generally Z-shaped and includes a hook 240 on the end opposite the end where the interference member 238 is attached to the key cylinder 126. In this embodiment, when the key cylinder 126 is in the first position, the hook 240 is hooked onto the transition portion 221 of the connector 212. As such, the hook 240 is disposed between an upwardly extending portion 242 of the platform 216 and the upwardly extending transition portion 221 of the connector 212, and is constructed and arranged to prevent the extension of the connector 212. In this embodiment, when the user attempts to press the release member 28, the transition portion 221 of the connector 212 abuts against a surface 242 of the hook end 240 of the interference member 236 and prevents further movement of the release member 28 and connector 212. Accordingly, the release member 28 is prevented from being actuated.

Figure 16 is a detailed view of the latch lock 30 in the second condition that permits the release member 28 to be movable to release the latch 26. In this embodiment, the key cylinder 126 has been turned in a clockwise direction using the key so that the hook 240 of the interference member 238 is no longer hooked onto the connector 212. As such, the interference member 238 does not prevent the extension of the connector 212. The release member 28 may be actuated to rotate the latch member 90 to the unlatched position. The key may be used to rotate the key cylinder 126 back to the first condition that prevents the release member 28 from being movable to release the latch 26.

Accordingly, in one embodiment, when the latch lock 30 is in the first condition and the container 12 is locked to the dock unit 14, the lock member 90 of the latch 26 may not be rotated to allow the latch engaging structure 22 to be disengaged from the latch 26. Similarly, in one embodiment, when the latch lock 30 is in the first condition and the container 12 is not locked to the dock unit 14, the lock member 90 of the latch 26 cannot be rotated to allow the latch engaging structure 22 to be engaged to the latch 26.

It is also contemplated that in some embodiments, the location of the latch engaging structure 22 and the latch 26 may be interchangeable such that the latch 26 may be located on the container 12 and the latch engaging structure 22 may be located on the dock unit 14. The location of the stop structure 70 and the stop engaging structure 68 may be interchangeable such that the stop structure 70 may be located on the container 12 and the stop engaging structure 68 may be located on the dock unit 14. It is also contemplated that the location of the latch 26 and the stop structure 70 may be interchangeable. For example, the latch 26 may be located near the rear portion 100 of the dock unit 14, and the stop structure 70 may be located at the junction between the first portion 31 and the second portion 33.

The latch 26 and latch engaging structure 22 may have any construction or configuration, and the illustrated embodiment is not intended to be limiting.

Embodiments of the present invention have been described with particular reference to the examples illustrated. However, it will be appreciated that variations and modifications may be made to the examples described within the scope of the present invention.

## Claims

1. A truck bed mountable storage system (10), comprising:
a container unit (12) comprising (a) a base container (16) defining a storage space for storing items and (b) a cover (18), the cover being movable between an open condition permitting access to the storage space and a closed condition preventing access to the storage space; (c) one or more rollers (58) arranged to rollingly transport the container unit; and (d) a handle (42) to facilitate the rolling transport of the container unit on the one or more rollers;
a dock unit (14) constructed and arranged to be fixed to a truck bed,
a latch engaging structure (22) provided on one of the of the dock unit and the container unit;
a latch (26) provided on the other of the dock unit and the container unit,
the latch being movable between (a) a latching position engaging the latch engaging structure to releasably lock the container unit to the dock unit and (b) a releasing position releasing the latch from the latch engaging structure to enable removal of the container unit from the dock unit, wherein when released and removed from the dock unit, the container unit can be rollingly transported; and
a release member (28) for moving the latch between the latching and releasing positions.

2. A truck bed mountable storage system according to claim 1, wherein the dock unit (14) further comprises a latch lock, (30) the latch lock constructed and arranged to be in a first condition that prevents the release member (28) from being movable to release the latch (26) or a second condition that permits the release member (28) to be movable to release the latch (26).

3. A truck bed mountable storage system according to claim 1 or 2, wherein the container unit (12) is mounted on top of the dock unit (14) when locked to one another, and wherein a portion of the dock unit (14) that carries the release member (28) and the latch lock (30) is positioned outwardly from beneath the container (12) to facilitate access to the release member (28) and the latch lock (30).

4. A truck bed mountable storage system according to any of claims 1 to 3, wherein the latch lock (30) comprises a key (128) and key cylinder, wherein the key (128) can be used to move the latch lock (30) into the first condition or the second condition.

5. A truck bed mountable storage system according to any of claims 1 to 4, wherein the cover (18) is pivotally connected to the base container (16), and further comprising a cover lock 111 constructed and arranged to releasably lock the cover (18) to the base container (16).

6. A truck bed mountable storage system according to claim 5, further comprising a key (128) that is usable to lock and unlock the cover lock (111).

7. A truck bed mountable storage system according to claim 6, wherein the same key can be used to move the latch lock (30) between the first and second conditions as well as to lock and unlock the cover lock (111).

8. A truck bed mountable storage system according to any of claims 1 to 7, wherein the container unit (12) locks to the dock unit (14) by horizontally moving the latch engaging structure (22) into locking engagement with the latch (26) on the dock unit (14).

9. A truck bed mountable storage system according to claim 8, wherein the one or more rollers (58) facilitates horizontal movement of the container (12) and latch engagement structure (22) thereof into locking engagement with the latch (26) on the dock unit (14).

10. A truck bed mountable storage system according to any of claims 1 to 9, wherein the cover (18) is pivotally connected to the base container (16), and further comprising cover lock (111) constructed and arranged to releasably lock the cover (18) to the base container (16).

11. A truck bed mountable storage system according to any of claims 1 to 10, wherein the dock unit (14) comprises a stop structure engageable with a stop engaging structure (68) on the container unit (12), wherein engagement between the stop structure (70) and the stop engaging structure (68) further restrains movement between the dock unit (14) and container unit (12) when the container unit (12) is locked to the dock unit (14).

12. A truck bed mountable storage system according to claim 11, wherein the stop engaging structure (68), must move horizontally away from the stop structure (70) to disengage from the stop structure (70).

## Patentansprüche

1. Auf eine Wagenladefläche montierbares Lagersystem (10), umfassend:
eine Behältereinheit (12), umfassend (a) einen Basisbehälter (16), der einen Lagerraum definiert, um Dinge zu lagern, und (b) eine Abdeckung (18), wobei die Abdeckung zwischen einem offenen Zustand, der Zugang zu dem Lagerraum ermöglicht, und einem geschlossenen Zustand, der den Zugang zu dem Lagerraum verhindert, bewegbar ist; (c) eine oder mehrere Laufrollen (58), die angeordnet sind, um die Behältereinheit laufrollend zu transportieren; und (d) einen Griff (42), um den Rolltransport der Behältereinheit auf der einen oder den mehreren Laufrollen zu erleichtern;
eine Ankoppeleinheit (14), die aufgebaut und angeordnet ist, um an einer Wagenladefläche befestigt zu werden;
eine Riegeleingriffstruktur (22), die auf einer von der Ankoppeleinheit und der Behältereinheit bereitgestellt wird;
einen Riegel (26), der auf der anderen von der Ankoppeleinheit und der Behältereinheit bereitgestellt wird,
wobei der Riegel zwischen (a) einer Verriegelungsposition, die mit der Riegeleingriffstruktur in Eingriff steht, um die Behältereinheit lösbar an der Ankoppeleinheit festzustellen, und (b) einer Auslöseposition, die welcher der Riegel aus der Riegeleingriffstruktur gelöst wird, um ein Abnehmen der Behältereinheit von der Ankoppeleinheit zu ermöglichen, bewegbar ist, wobei die Behältereinheit, wenn sie gelöst und von der Ankoppeleinheit abgenommen ist, rollend transportiert werden kann; und
ein Auslöseorgan (28), um den Riegel zwischen den Verriegelungs- und Auslösepositionen zu bewegen.

2. Auf eine Wagenladefläche montierbares Lagersystem nach Anspruch 1, wobei die Ankoppeleinheit (14) ferner eine Riegelsperre (30) umfasst, wobei die Riegelsperre aufgebaut und angeordnet ist, um sich in einem ersten Zustand, der verhindert, dass das Auslöseorgan (28) bewegbar ist, um den Riegel (26) zu lösen, oder in einem zweiten Zustand, der es dem Auslöseorgan (28) ermöglicht, bewegbar zu sein, um den Riegel (26) zu lösen, zu befinden.

3. Auf eine Wagenladefläche montierbares Lagersystem nach Anspruch 1 oder 2, wobei die Behältereinheit (12) oben auf der Ankoppeleinheit (14) montiert ist, wenn sie aneinander festgestellt sind, und wobei ein Teil der Ankoppeleinheit (14), der das Auslöseorgan (28) und die Riegelsperre (30) trägt, von unterhalb des Behälters (12) nach außen positioniert ist, um den Zugang zu dem Auslöseorgan (28) und der Riegelsperre (30) zu erleichtern.

4. Auf eine Wagenladefläche montierbares Lagersystem nach einem der Ansprüche 1 bis 3, wobei die Riegelsperre (30) einen Schlüssel (128) und einen Schlüsselzylinder umfasst, wobei der Schlüssel (128) verwendet werden kann, um die Riegelsperre (30) in den ersten Zustand oder den zweiten Zustand zu bewegen.

5. Auf eine Wagenladefläche montierbares Lagersystem nach einem der Ansprüche 1 bis 4, wobei die Abdeckung (18) schwenkbar mit dem Basisbehälter (16) verbunden ist, und ferner umfassend eine Abdeckungssperre (111), die aufgebaut und angeordnet ist, um die Abdeckung (18) lösbar an dem Basisbehälter (16) festzustellen.

6. Auf eine Wagenladefläche montierbares Lagersystem nach Anspruch 5, ferner umfassend einen Schlüssel (128), der verwendbar ist, um die Abdeckungssperre (111) zu schließen und zu öffnen.

7. Auf eine Wagenladefläche montierbares Lagersystem nach Anspruch 6, wobei der gleiche Schlüssel verwendet werden kann, um die Riegelsperre (30) zwischen dem ersten und dem zweiten Zustand zu bewegen und die Abdeckungssperre (111) zu schließen und zu öffnen.

8. Auf eine Wagenladefläche montierbares Lagersystem nach einem der Ansprüche 1 bis 7, wobei die Behältereinheit (12) an der Ankoppeleinheit (14) festgestellt wird, indem die Riegeleingriffstruktur (22) in Sperreingriff mit dem Riegel (26) auf der Ankoppeleinheit (14) gebracht wird.

9. Auf eine Wagenladefläche montierbares Lagersystem nach Anspruch 8, wobei die eine oder die mehreren Laufrollen (58) eine waagerechte Bewegung des Behälters (12) und der Riegeleingriffstruktur (22) derselben in Sperreingriff mit dem Riegel (26) der Ankoppeleinheit (14) erleichtern.

10. Auf eine Wagenladefläche montierbares Lagersystem nach einem der Ansprüche 1 bis 9, wobei die Abdeckung (18) schwenkbar mit dem Basisbehälter (16) verbunden ist, und ferner umfassend eine Abdeckungssperre (111), die aufgebaut und angeordnet ist, um die Abdeckung (18) lösbar an dem Basisbehälter (16) festzustellen.

11. Auf eine Wagenladefläche montierbares Lagersystem nach einem der Ansprüche 1 bis 10, wobei die Ankoppeleinheit (14) eine Anschlagstruktur umfasst, die in eine Anschlageingriffstruktur (68) auf der Behältereinheit (12) in Eingriff gebracht werden kann, wobei der Eingriff zwischen der Anschlagstruktur (70) und der Anschlageingriffstruktur (68) die Bewegung zwischen der Ankoppeleinheit (14) und der Behältereinheit (12) weiter einschränkt, wenn die Behältereinheit (12) an der Ankoppeleinheit (14) festgestellt wird.

12. Auf eine Wagenladefläche montierbares Lagersystem nach Anspruch 11, wobei sich die Anschlageingriffstruktur (68) waagerecht von der Anschlagstruktur (70) entfernen muss, um sich aus der Anschlagstruktur (70) zu lösen.

## Revendications

1. Système de stockage (10) montable sur une plateforme de camion, comprenant :
une unité de conteneur (12) comprenant (a) un conteneur de base (16) définissant un espace de stockage pour stocker des articles et (b) un couvercle (18), le couvercle étant mobile entre un état ouvert permettant un accès à l'espace de stockage et un état fermé empêchant l'accès à l'espace de stockage ; (c) un ou plusieurs galets (58) aménagés pour transporter par roulement l'unité de conteneur ; et (d) une poignée (42) pour faciliter le transport par roulement de l'unité de conteneur sur les uns ou plusieurs galets ;
une unité d'accrochage (14) conçue et aménagée pour être fixée à une plateforme de camion ;
une structure d'engagement de verrou (22) aménagée sur l'uns ou l'autre de l'unité d'accrochage et de l'unité de conteneur ;
un verrou (26) aménagé sur l'autre de l'unité d'accrochage et l'unité de conteneur,
le verrou étant mobile entre (a) une position de verrouillage s'engageant sur la structure d'engagement de verrou pour verrouiller de manière libérable l'unité de conteneur sur l'unité d'accrochage et (b) une position de libération libérant le verrou de la structure d'engagement de verrou afin de permettre le retrait de l'unité de conteneur de l'unité d'accrochage, dans lequel, lorsqu'elle est libérée et retirée de l'unité d'accrochage, l'unité de conteneur peut être aisément transportée par roulement ; et
un élément de libération (28) pour déplacer le verrou entre les positions de verrouillage et de libération.

2. Système de stockage montable sur une plateforme de camion selon la revendication 1, dans lequel l'unité d'accrochage (14) comprend par ailleurs une serrure de verrouillage (30), la serrure de verrouillage étant conçue et aménagée pour se trouver dans un premier état qui empêche l'élément de libération (28) de se déplacer pour libérer le verrou (26) ou un second état qui permet à l'élément de libération (28) de se déplacer pour libérer le verrou (26).

3. Système de stockage montable sur une plateforme de camion selon la revendication 1 ou 2, dans lequel l'unité de conteneur (12) est montée au-dessus de l'unité d'accrochage (14) lorsqu'elles sont verrouillées l'une à l'autre, et dans lequel une portion de l'unité d'accrochage (14) qui porte l'élément de libération (28) et la serrure de verrouillage (30) est positionnée à l'extérieur en dessous du conteneur (12) pour faciliter l'accès à l'élément de libération (28) et à la serrure de verrouillage (30).

4. Système de stockage montable sur une plateforme de camion selon l'une quelconque des revendications 1 à 3, dans lequel la serrure de verrouillage (30) comprend une clé (128) et un cylindre à clé, dans lequel la clé (128) peut être utilisée pour déplacer la serrure de verrouillage (30) dans le premier état ou le second état.

5. Système de stockage montable sur une plateforme de camion selon l'une quelconque des revendications 1 à 4, dans lequel le couvercle (18) est raccordé à pivotement au conteneur de base (16) et comprenant en outre un verrou de couvercle (111) conçu et aménagé pour verrouiller de manière libérable le couvercle (18) sur le conteneur de base (16).

6. Système de stockage montable sur une plateforme de camion selon la revendication 5, comprenant en outre une clé (128) qui est utilisable pour verrouiller et déverrouiller la serrure (111) du couvercle.

7. Système de stockage montable sur une plateforme de camion selon la revendication 6, dans lequel la même clé peut être utilisée pour déplacer la serrure de verrouillage (30) entre les premier et second états ainsi que pour verrouiller et déverrouiller la serrure (111) du couvercle.

8. Système de stockage montable sur une plateforme de camion selon l'une quelconque des revendications 1 à 7, dans lequel l'unité de conteneur (12) se verrouille sur l'unité d'accrochage (14) en déplaçant horizontalement la structure d'engagement de verrou (22) en engagement de verrouillage avec le verrou (26) sur l'unité d'accrochage (14).

9. Système de stockage montable sur une plateforme de camion selon la revendication 8, dans lequel les un ou plusieurs galets (58) facilitent le mouvement horizontal du conteneur et de sa structure d'engagement de verrou (22) en engagement de verrouillage avec le verrou (26) sur l'unité d'accrochage (14).

10. Système de stockage montable sur une plateforme de camion selon l'une quelconque des revendications 1 à 9, dans lequel le couvercle (19) est raccordé à pivotement au conteneur de base (16) et comprenant en outre un verrou de couvercle (111) conçu et aménagé pour verrouiller de manière libérable le couvercle sur le conteneur de base (16).

11. Système de stockage montable sur une plateforme de camion selon l'une quelconque des revendications 1 à 10, dans lequel l'unité d'accrochage (14) comprend une structure d'arrêt qui peut s'engager sur une structure d'engagement d'arrêt (68) sur l'unité de conteneur (12), dans lequel l'engagement entre la structure d'arrêt (70) et la structure d'engagement d'arrêt (68) restreint en outre le mouvement entre l'unité d'accrochage (14) et l'unité de conteneur (12) lorsque l'unité de conteneur (12) est verrouillée sur l'unité d'accrochage (14).

12. Système de stockage montable sur une plateforme de camion selon la revendication 11, dans lequel la structure d'engagement d'arrêt (68) doit se déplacer horizontalement en s'écartant de la structure d'arrêt (70) pour se dégager de la structure d'arrêt (70).
